# EUROPEAN PATENT SPECIFICATION

(11) **EP 2 420 986 B1**
(45) Date of publication and mention of the grant of the patent: **09.08.2017**
(21) Application number: 11177884.1
(22) Date of filing: 18.08.2011
(51) Int. Cl.: G08G 1/16, B60Q 1/08, B60W 30/08

(54) **Vehicle illumination system**
Fahrzeugbeleuchtungssystem
Système d'illumination pour véhicule

(30) Priority: 19.08.2010 JP 2010183964
(43) Date of publication of application: 22.02.2012
(73) Proprietor: Koito Manufacturing Co., Ltd., Tokyo 108-8711 (JP)
(72) Inventor: Komatsu, Motohiro, Shizuoka-shi, Shizuoka (JP); Kitazawa, Yukiko, Shizuoka-shi, Shizuoka (JP); Tanaka, Hidetada, Shizuoka-shi, Shizuoka (JP)
(74) Representative: Intès, Didier Gérard André

(56) References cited:
- EP-A1- 2 128 521
- EP-A2- 1 970 249
- DE-A1- 10 354 104
- US-A1- 2008 175 012
- US-B1- 6 281 806

## Description

### BACKGROUND OF THE INVENTION

### <FIELD OF THE INVENTION>

The present invention relates to a vehicle illumination system capable of illuminating pedestrians around a vehicle to attract an attention of a driver of a vehicle to the pedestrians.

### <RELATED ART>

Conventionally, vehicle illumination systems are known in which a position of a pedestrian is detected using a camera or a radar device, a spot lamp is swiveled using an actuator and spot light is projected to the detected pedestrian. For example, JP-A-2004-185105 discloses a vehicle illumination system having a configuration in which a blinking interval or a color of spot light (electromagnetic wave marker) is changed depending on a position of a pedestrian ahead of a vehicle so that a driver can easily identify the pedestrian. Similar vehicle illumination system is also disclosed in the publication US 2008/0175012 A1.

However, in the system of JP-A-2004-185105, in the case that a plurality of pedestrians are present around a vehicle, spot lights are projected to the respective pedestrian (refer to FIG. 4 and paragraph 0062 of JP-A-2004-185105). Accordingly, there are problems that an attention of the driver is distracted and the driver cannot properly identify a pedestrian having a high possibility of collision or the spot light is applied to even a pedestrian having a low possibility of collision, for example.

### SUMMARY OF THE INVENTION

One or more embodiments of the invention provide a vehicle illumination system capable of letting an attention of a driver be concentrated on a pedestrian having the highest possibility of collision among a plurality of pedestrians, capable of enhancing safety and capable of eliminating unnecessary spot illumination.

In accordance with the invention, a vehicle illumination system as set forth in claim 1 is provided.

Other aspects and advantages of the invention will be apparent from the following description and the appended claims.

### BRIEF DESCRIPTION OF THE DRAWINGS

FIG. 1 is a block diagram showing a vehicle illumination system according to an exemplary embodiment.
FIG. 2 is a flowchart of an example of a pedestrian illumination program.
FIGS. 3A and 3B are schematic views illustrating an illumination model generated by the program shown in FIG. 2.
FIG. 4 is a schematic view illustrating a turning ON timing of a spot lamp.
FIG. 5 is a flowchart of another example of the pedestrian illumination program.
FIG. 6 is a schematic view illustrating an illumination model generated by the program shown in FIG. 5.

### DETAILED DESCRIPTION OF EXEMPLARY EMBODIMENT

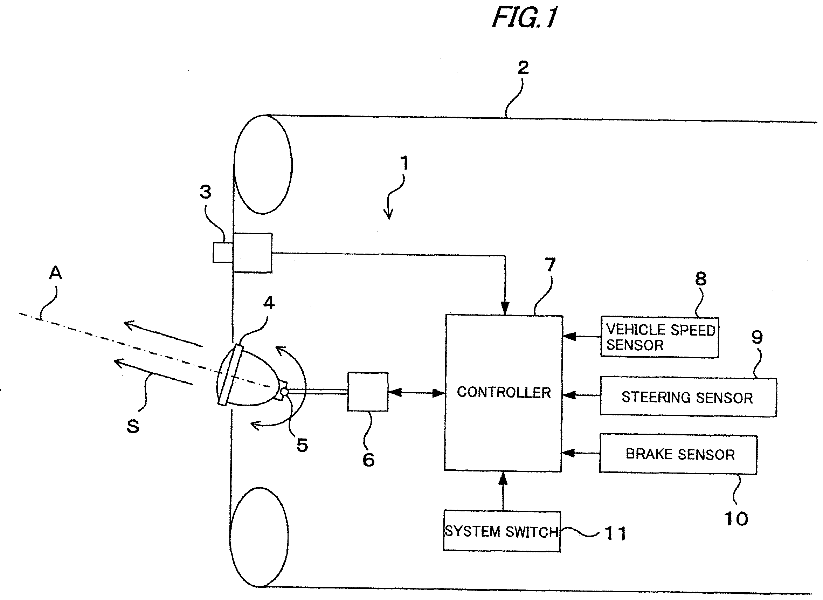

An exemplary embodiment of the invention will be described below referring to the accompanying drawings. Further, the exemplary embodiment and examples of the embodiment are not intended to limit the invention but to serve as examples of the invention, and all features or combinations thereof described in the exemplary embodiment are not always essential to the invention. As shown in FIG. 1, a vehicle illumination system 1 according to the exemplary embodiment is equipped with a detector 3 for detecting pedestrians ahead of a vehicle 2; a spot lamp 4 for projecting a spot light S from a front end portion of the vehicle 2 to a detected pedestrian; an actuator 6 for swiveling the spot lamp 4 around its vertical axis 5 in a horizontal direction; and a controller 7 for controlling an ON/OFF operation of the spot lamp 4 and an operation of the actuator 6. The detector 3 and the spot lamp 4 may also be installed at a rear end portion of the vehicle 2 so that the spot light can also be projected to pedestrians behind the vehicle 2.

A camera, a millimeter-wave radar device or both may be used as the detector 3. Instead of a dedicated lamp, a fog lamp or the low-beam lamp or the high-beam lamp of the headlamp may also be used as the spot lamp 4. The spot lamp 4 may be swiveled as a whole or an optical component thereof, such as a light source, a lens or a reflector, may be turned. A motor, a solenoid, a piezoelectric actuator or the like may be used as the actuator 6. A vehicle speed sensor 8 for detecting a speed of the vehicle 2, a steering sensor 9 for detecting a steering angle of a steering wheel, a brake sensor 10 for detecting a brake signal, and a system switch 11 for turning ON/OFF the vehicle illumination system 1 may be connected to the controller 7.

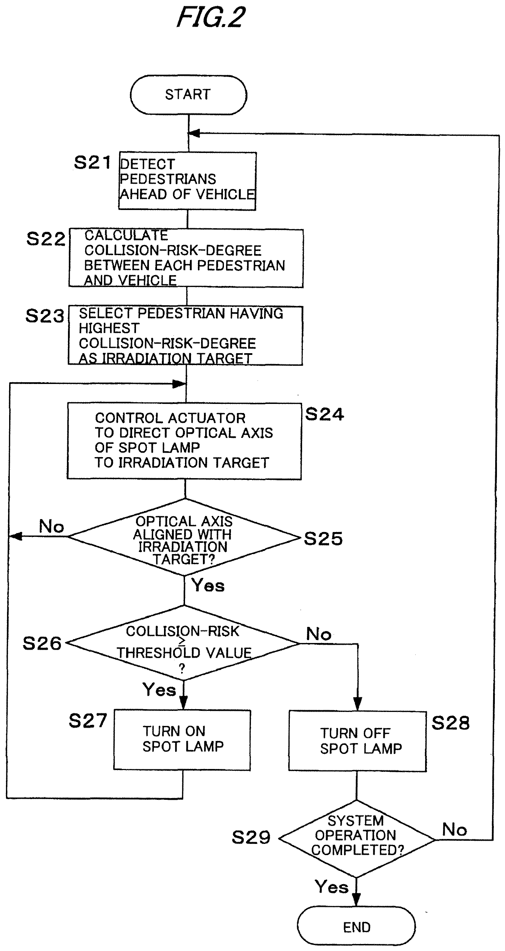

When the driver turns ON the system switch 11, the controller 7 starts an illumination program shown in FIG. 2. First, the controller 7 detects a plurality of pedestrians present ahead of the vehicle 2 using the detector 3 (at S21). Next, the controller 7 calculates a possibility of collision between each of the plurality of pedestrians and the vehicle 2 as a collision-risk-degree (at S22). Then, the controller 7 selects a pedestrian having the highest collision-risk-degree from among the plurality of pedestrians as an irradiation target of the spot lamp 4 (at S23).

For example, vehicle speed, steering angle, brake signal, a relative position of the pedestrian with respect to the vehicle 2, a position (sidewalk, roadway, left side or right side) of the pedestrian on the road, a direction (moving direction) of the pedestrian, a walking speed of the pedestrian, a color of a clothing of the pedestrian, and an attentiveness (a movement of a face of the driver and an open/close state of the driver's eyes) of the driver may be used as parameters for a calculation of the collision-risk-degree. Furthermore, these parameters may be multiplied by predetermined coefficients to obtain integrated values, and the pedestrian having the highest integrated value may be selected as an irradiation target.

Next, the controller 7 controls the actuator 6 so that an optical axis A (see FIG. 1) of the spot lamp 4 directs to the irradiation target (at S24). Then, the controller 7 judges whether the optical axis A of the spot lamp 4 is aligned with the irradiation target on the basis of a signal indicating the position of the pedestrian and input from the detector 3 and a feedback signal from the actuator 6 (at S25). Next, the controller 7 continues the control of the actuator 6 until the optical axis A is aligned with the irradiation target and adjusts the optical axis A of the spot lamp 4 to follow the movement of the pedestrian having the highest collision-risk-degree (at S24 and S25). It is possible to confirm whether the optical axis A of the spot lamp 4 is aligned with the irradiation target by using a timer in which a predetermined delay time is set.

In the case that the optical axis A of the spot lamp 4 is aligned with the irradiation target, the controller 7 then compares the collision-risk-degree of the irradiation target with a predetermined threshold value (at S26). In the case that the collision-risk-degree of the irradiation target has become equal to or more than the threshold value, the spot lamp 4 is turned ON (at S27), and the optical axis A of the spot lamp 4 is adjusted to follow the movement of the irradiation target while the spot lamp 4 is in its ON state (at S24 and S25). On the other hand, in the case that the collision-risk-degree of the irradiation target has become less than the threshold value, the spot lamp 4 is turned OFF (at S28), and the controller 7 repeats the sequence of the control until the system switch 11 is turned OFF (at S29). Further, a threshold value of turning ON and a threshold value of turning OFF may be different to each other.

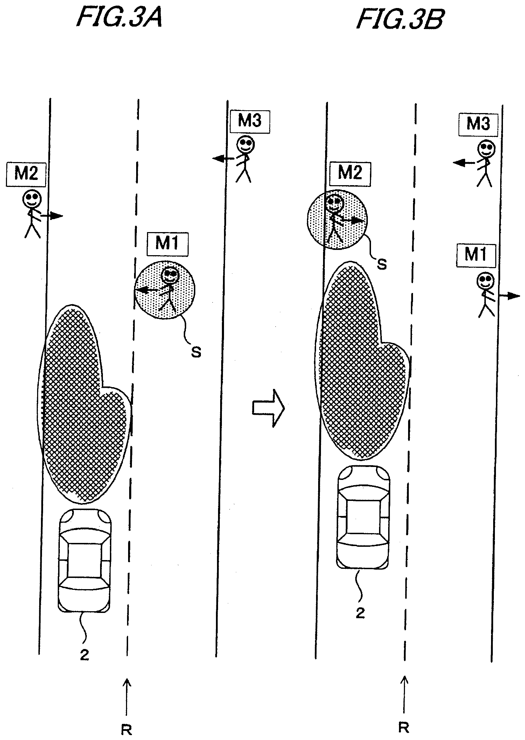

FIGS. 3A and 3B show scenes in which three pedestrians M1, M2 and M3 are crossing a road R ahead of the vehicle 2. In the scene shown in FIG. 3A, the pedestrian M1 is the irradiation target having the highest collision-risk-degree, and the spot light S is projected to the pedestrian M1. Hence, the spot light S is not projected to the other pedestrians M2 and M3, and the attention of the driver can be concentrated on the pedestrian M1 having the highest collision-risk-degree. If the pedestrian M1 recognizes the danger and moves backward as shown in FIG. 3B, the pedestrian M2 is then selected as the irradiation target having the highest collision-risk-degree.

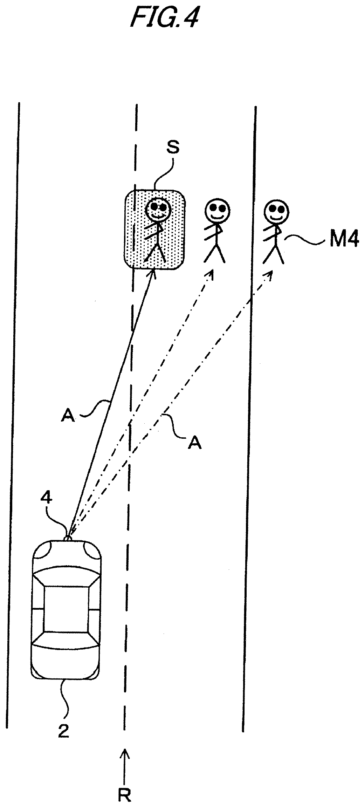

FIG. 4 shows a scene in which a pedestrian M4 is crossing the road R from right to left. In this scene, the optical axis A of the spot lamp 4 is swung from right to left to follow the movement of the pedestrian M4 while the spot lamp 4 is turned OFF. When the collision-risk-degree of the pedestrian M4 has reached the threshold value, the spot lamp 4 is turned ON. Hence, there is no fear that the visual field of the driver may be disturbed by wasteful swinging movement of the spot light S. Furthermore, when the pedestrian M4 has reached a dangerous area, the spot light S can be applied immediately to the pedestrian M4.

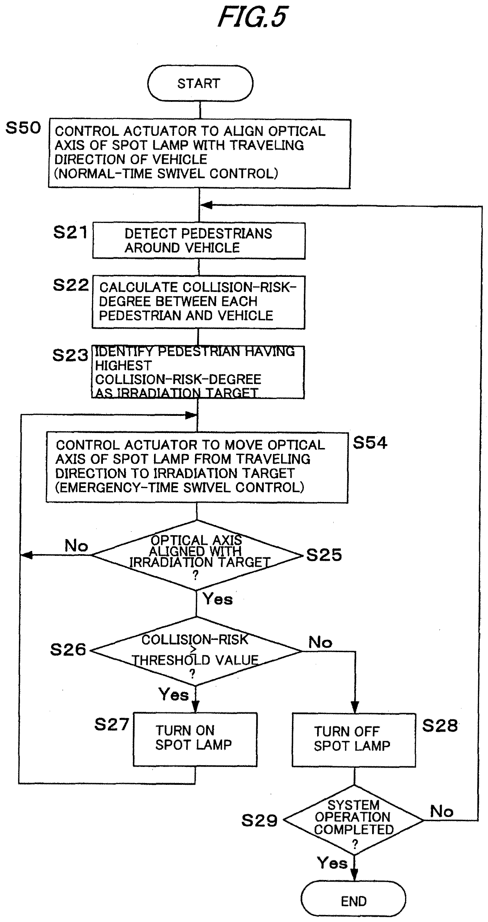

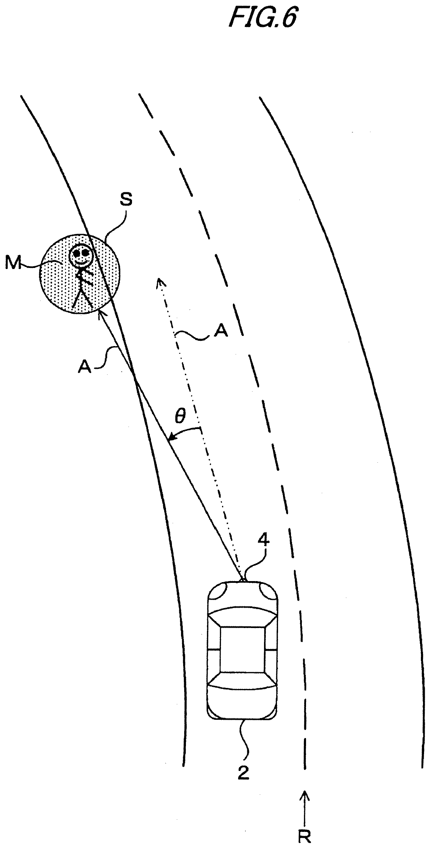

FIGS. 5 and 6 show another method for controlling the spot lamp 4 using the controller 7. According to this method, at the step of a normal-time swivel control (at S50), the controller 7 performs control similar to that of AFS (adaptive front-lighting system) for vehicle headlamps so that the optical axis A of the spot lamp 4 is aligned with the traveling direction of the vehicle 2 according to the speed of the vehicle and the steering angle of the steering wheel thereof. After the detection of a pedestrian M, the controller 7 performs emergency-time swivel control (at S54) so that the optical axis A of the spot lamp 4 is moved away from the traveling direction of the subject vehicle and directed to the pedestrian M having the highest collision-risk-degree. Hence, the swivel angle (θ) of the optical axis A can be minimized, and the spot light S can be turned ON immediately when the pedestrian M suddenly crosses the road, for example.

According to the above embodiment and the examples of the embodiment, the vehicle illumination system calculates the collision-risk-degree between each of a plurality of pedestrians and the vehicle and performs control so that the optical axis of the spot lamp is directed to the pedestrian having the highest collision-risk-degree. Hence, it is possible to let the attention of the driver be concentrated on the pedestrian having the highest collision-risk-degree, to enhance safety and eliminate unnecessary spot illumination.

### [Description of Reference Numerals and Signs]

- 1: vehicle illumination system
- 2: subject vehicle
- 3: detector
- 4: spot lamp
- 6: actuator
- 7: controller
- A: optical axis of spot lamp
- M: pedestrian
- S: spot light

## Claims

1. A vehicle illumination system comprising:
a detector (3) for detecting pedestrians around or ahead of a vehicle (2);
a spot lamp (4) for projecting a spot light to the detected pedestrian;
an actuator (6) for swiveling the spot lamp; and
a controller (7) for controlling the spot lamp and the actuator,
wherein the controller (7) is configured to calculate a possibility of collision between each of a plurality of pedestrians and the vehicle as a collision-risk-degree and then to control the actuator (6) so that an optical axis (A) of the spot lamp (4) directs to the pedestrian having the highest collision-risk-degree; and
**characterized in that** the controller (7) is configured to turn ON the spot lamp (4) after the optical axis (A) of the spot lamp (4) has been directed to the pedestrian having the highest collision-risk-degree and when the collision-risk-degree of the pedestrian has become equal to or more than a predetermined threshold value, so as to avoid disturbing a visual field of a driver, and the controller (7) is configured to turn OFF the spot lamp after the collision-risk-degree becomes less than the predetermined threshold value.

2. The vehicle illumination system according to claim 1, wherein the controller (7) is configured to perform a control so that the optical axis (A) of the spot lamp (4) is adjusted to follow a movement of the pedestrian having the highest collision-risk-degree before the spot lamp (4) is turned ON.

3. The vehicle illumination system according to claim 1 or 2, wherein the controller (7) is configured to perform a control so that the spot lamp (4) is turned ON after the optical axis (A) of the spot lamp has directed to the pedestrian having the highest collision-risk-degree.

4. The vehicle illumination system according to any one of claims 1 to 3, wherein the controller (7) is configured to perform a normal-time swivel control so that the optical axis (A) of the spot lamp (4) is aligned with a traveling direction of the vehicle according to a speed and a steering angle of the vehicle, and the controller (7) is configured to perform an emergency-time swivel control so that the optical axis (A) of the spot lamp (4) is moved from the traveling direction of the vehicle to the pedestrian having the highest collision-risk-degree.

5. A method of controlling a vehicle illumination system comprising:
detecting pedestrians around or ahead of a vehicle (2);
calculating a possibility of collision between each of a plurality of pedestrians and the vehicle (2) as a collision-risk-degree; and
directing an optical axis (A) of a spot lamp (4) to the pedestrian having the highest collision-risk-degree; and **characterized in that** it also comprises:
turning ON the spot lamp (4) after the optical axis (A) of the spot lamp (4) has been directed to the pedestrian having the highest collision-risk-degree and when the collision-risk-degree of the pedestrian has become equal to or more than a predetermined threshold value, so as to avoid disturbing a visual field of a driver ; and
turning OFF the spot lamp (4) after the collision-risk-degree becomes less than the predetermined threshold value.

6. The method according to claim 5, further comprising:
adjusting the optical axis (A) of the spot lamp (4) to follow a movement of the pedestrian having the highest collision-risk-degree before turning ON the spot lamp (4).

7. The method according to claim 5 or 6, further comprising:
turning ON the spot lamp (4) after the optical axis (A) of the spot lamp has directed to the pedestrian having the highest collision-risk-degree.

8. The method according to any one of claims 5 to 7, further comprising:
performing a normal-time swivel control so that the optical axis (A) of the spot lamp (4) is aligned with a traveling direction of the vehicle (2) according to a speed and a steering angle of the vehicle (2); and
performing an emergency-time swivel control so that the optical axis (A) of the spot lamp (4) is moved from the traveling direction of the vehicle (2) to the pedestrian having the highest collision-risk-degree.

## Patentansprüche

1. Fahrzeugbeleuchtungssystem, umfassend:
einen Detektor (3) zum Detektieren von Fußgängern rund um das oder vor dem Fahrzeug (2),
einen Spotstrahler (4) zum Projizieren eines Spotlichts auf den detektierten Fußgänger,
einen Aktor (6) zum Schwenken des Spotstrahlers, und
eine Steuervorrichtung (7) zum Steuern des Spotstrahlers und des Aktors,
wobei die Steuervorrichtung (7) dazu ausgebildet ist, eine Möglichkeit einer Kollision zwischen jedem aus einer Vielzahl von Fußgängern und dem Fahrzeug als Kollisionsrisikograd zu berechnen und dann den Aktor (6) derart zu steuern, dass eine optische Achse (A) des Spotstrahlers (4) hin zu dem Fußgänger mit dem höchsten Kollisionsrisikograd gerichtet wird, und
**dadurch gekennzeichnet, dass** die Steuervorrichtung (7) dazu ausgebildet ist, den Spotstrahler (4) einzuschalten, nachdem die optische Achse (A) des Spotstrahlers (4) hin zu dem Fußgänger mit dem höchsten Kollisionsrisikograd gerichtet wurde und wenn der Kollisionsrisikograd des Fußgängers größer gleich einem vorgegebenen Schwellenwert wurde, um zu vermeiden, ein Gesichtsfeld eines Fahrzeuglenkers zu stören, und die Steuervorrichtung (7) dazu ausgebildet ist, den Spotstrahler auszuschalten, nachdem der Kollisionsrisikograd kleiner als der vorgegebene Schwellenwert wird.

2. Fahrzeugbeleuchtungssystem nach Anspruch 1, wobei die Steuervorrichtung (7) dazu ausgebildet ist, eine Steuerung derart durchzuführen, dass die optische Achse (A) des Spotstrahlers (4) eingestellt wird, um einer Bewegung des Fußgängers mit dem höchsten Kollisionsrisikograd zu folgen, ehe der Spotstrahler (4) eingeschaltet wird.

3. Fahrzeugbeleuchtungssystem nach Anspruch 1 oder 2, wobei die Steuervorrichtung (7) dazu ausgebildet ist, eine Steuerung derart durchzuführen, dass der Spotstrahler (4) eingeschaltet wird, nachdem die optische Achse (A) des Spotstrahlers hin zu dem Fußgänger mit dem höchsten Kollisionsrisikograd gerichtet wurde.

4. Fahrzeugbeleuchtungssystem nach einem beliebigen der Ansprüche 1 bis 3, wobei die Steuervorrichtung (7) dazu ausgebildet ist, eine Normalzeit-Schwenksteuerung derart durchzuführen, dass die optische Achse (A) des Spotstrahlers (4) mit einer Fahrtrichtung des Fahrzeugs gemäß einer Geschwindigkeit und einem Lenkwinkel des Fahrzeugs abgeglichen wird, und wobei die Steuervorrichtung (7) dazu ausgebildet ist, eine Notfallzeit-Schwenksteuerung derart durchzuführen, dass die optische Achse (A) des Spotstrahlers (4) von der Fahrtrichtung des Fahrzeugs hin zu dem Fußgänger mit dem höchsten Kollisionsrisikograd bewegt wird.

5. Verfahren zum Steuern eines Fahrzeugbeleuchtungssystems, umfassend:
Detektieren von Fußgängern rund um und vor einem Fahrzeug (2),
Berechnen einer Möglichkeit einer Kollision zwischen jedem aus einer Vielzahl von Fußgängern und dem Fahrzeug (2) als Kollisionsrisikograd, und
Richten einer optischen Achse (A) eines Spotstrahlers (4) hin zu dem Fußgänger mit dem höchsten Kollisionsrisikograd, und **dadurch gekennzeichnet, dass** es auch umfasst:
Einschalten des Spotstrahlers (4), nachdem die optische Achse (A) des Spotstrahlers (4) hin zu dem Fußgänger mit dem höchsten Kollisionsrisikograd gerichtet wurde und wenn der Kollisionsrisikograd des Fußgängers größer gleich einem vorgegebenen Schwellenwert wird, um zu vermeiden, ein Gesichtsfeld eines Fahrzeuglenkers zu stören, und
Abschalten des Spotstrahlers (4), nachdem der Kollisionsrisikograd kleiner als der vorgegebene Schwellenwert wird.

6. Verfahren nach Anspruch 5, ferner umfassend:
Einstellen der optischen Achse (A) des Spotstrahlers (4), um einer Bewegung des Fußgängers mit dem höchsten Kollisionsrisikograd zu folgen, ehe der Spotstrahler (4) eingeschaltet wird.

7. Verfahren nach Anspruch 5 oder 6, ferner umfassend:
Einschalten des Spotstrahlers (4), nachdem die optische Achse (A) des Spotstrahlers hin zu dem Fußgänger mit dem höchsten Kollisionsrisikograd gerichtet wurde.

8. Verfahren nach einem beliebigen der Ansprüche 5 bis 7, ferner umfassend:
Durchführen einer Normalzeit-Schwenksteuerung derart, dass die optische Achse (A) des Spotstrahlers (4) mit einer Fahrtrichtung des Fahrzeugs (2) gemäß einer Geschwindigkeit und einem Lenkwinkel des Fahrzeugs (2) abgeglichen wird, und
Durchführen einer Notfallzeit-Schwenksteuerung derart, dass die optische Achse (A) des Spotstrahlers (4) von der Fahrtrichtung des Fahrzeugs (2) hin zu dem Fußgänger mit dem höchsten Kollisionsrisikograd bewegt wird.

## Revendications

1. Système d'illumination pour véhicule comprenant :
un détecteur (3) destiné à détecter des piétons autour ou à l'avant d'un véhicule (2) ;
un projecteur à faisceau étroit (4) destiné à projeter un faisceau de lumière vers le piéton détecté ;
un dispositif d'actionnement (6) destiné à faire pivoter le projecteur à faisceau étroit ; et
un dispositif de commande (7) destiné à contrôler le projecteur à faisceau étroit et le dispositif d'actionnement,
dans lequel le dispositif de commande (7) est configuré pour calculer une possibilité de collision entre chacun d'une pluralité de piétons et le véhicule en tant que degré de risque de collision et pour ensuite commander le dispositif d'actionnement (6) de sorte qu'un axe optique (A) du projecteur à faisceau étroit (4) soit orienté vers le piéton qui présente le degré de risque de collision le plus élevé ; et
**caractérisé en ce que** le dispositif de commande (7) est configuré pour allumer le projecteur à faisceau étroit (4) après que l'axe optique (A) du projecteur à faisceau étroit (4) a été orienté vers le piéton qui présente le degré de risque de collision le plus élevé, et lorsque le degré de risque de collision du piéton est devenu égal ou supérieur à une valeur de seuil prédéterminée, de façon à éviter de perturber un champ visuel d'un conducteur, et le dispositif de commande (7) est configuré pour éteindre le projecteur à faisceau étroit après que le degré de risque de collision est devenu inférieur à la valeur de seuil prédéterminée.

2. Système d'illumination pour véhicule selon la revendication 1, dans lequel le dispositif de commande (7) est configuré pour exécuter une commande de sorte que l'axe optique (A) du projecteur à faisceau étroit (4) soit réglé de manière à suivre un mouvement du piéton qui présente le degré de risque de collision le plus élevé avant que le projecteur à faisceau étroit (4) soit allumé.

3. Système d'illumination pour véhicule selon la revendication 1 ou 2, dans lequel le dispositif de commande (7) est configuré pour exécuter une commande de sorte que le projecteur à faisceau étroit (4) soit allumé après que l'axe optique (A) du projecteur à faisceau étroit a été orienté vers le piéton qui présente le degré de risque de collision le plus élevé.

4. Système d'illumination pour véhicule selon l'une quelconque des revendications 1 à 3, dans lequel le dispositif de commande (7) est configuré pour exécuter une commande de pivotement en temps normal de sorte que l'axe optique (A) du projecteur à faisceau étroit (4) soit aligné avec une direction de déplacement du véhicule selon une vitesse et un angle de direction du véhicule, et le dispositif de commande (7) est configuré pour exécuter une commande de pivotement en urgence de sorte que l'axe optique (A) du projecteur à faisceau étroit (4) soit déplacé de la direction de déplacement du véhicule vers le piéton qui présente le degré de risque de collision le plus élevé.

5. Procédé de commande d'un système d'illumination pour véhicule comprenant :
la détection de piétons autour ou à l'avant d'un véhicule (2) ;
le calcul d'une possibilité de collision entre chacun d'une pluralité de piétons et le véhicule (2) en tant que degré de risque de collision ; et
l'orientation de l'axe optique (A) d'un projecteur à faisceau étroit (4) vers le piéton qui présente le degré de risque de collision le plus élevé ; et **caractérisé en ce qu'**il comprend en outre :
l'allumage du projecteur à faisceau étroit (4) après que l'axe optique (A) du projecteur à faisceau étroit (4) a été orienté vers le piéton qui présente le degré de risque de collision le plus élevé, et lorsque le degré de risque de collision du piéton est devenu égal ou supérieur à une valeur de seuil prédéterminée, afin d'éviter de perturber un champ visuel d'un conducteur ; et
l'extinction du projecteur à faisceau étroit (4) après que le degré de risque de collision est devenu inférieur à la valeur de seuil prédéterminée.

6. Procédé selon la revendication 5, comprenant en outre :
le réglage de l'axe optique (A) du projecteur à faisceau optique (4) afin de suivre un mouvement du piéton qui présente le degré de risque de collision le plus élevé avant l'allumage du projecteur à faisceau étroit (4).

7. Procédé selon la revendication 5 ou 6, comprenant en outre :
l'allumage du projecteur à faisceau étroit (4) après que l'axe optique (A) du projecteur à faisceau étroit a été orienté vers le piéton qui présente le degré de risque de collision le plus élevé.

8. Procédé selon l'une quelconque des revendications 5 à 7, comprenant en outre :
l'exécution d'une commande de pivotement en temps normal de sorte que l'axe optique (A) du projecteur à faisceau étroit (4) soit aligné avec une direction de déplacement du véhicule (2) selon une vitesse et un angle de direction du véhicule (2) ; et
l'exécution d'une commande de pivotement en urgence de sorte que l'axe optique (A) du projecteur à faisceau étroit (4) soit déplacé depuis la direction de déplacement du véhicule (2) vers le piéton qui présente le degré de risque de collision le plus élevé.
